# EUROPÄISCHE PATENTSCHRIFT

(11) **EP 0 412 489 B1**
(45) Veröffentlichungstag und Bekanntmachung des Hinweises auf die Patenterteilung: **23.03.1994**
(21) Anmeldenummer: 90115109.2
(22) Anmeldetag: 06.08.1990
(51) Int. Cl.: B26B 5/00, B26B 3/03

(54) **Vorrichtung zum Schneiden von Obst, Gemüse oder dergleichen in Scheiben**
Apparatus for slicing fruit, vegetables or the like
Dispositif pour la coupe en tranches des fruits ou légumes

(30) Priorität: 05.08.1989 DE 3926013
(43) Veröffentlichungstag der Anmeldung: 13.02.1991
(73) Patentinhaber: A. Börner GmbH, 54526 Niederkail (DE)
(72) Erfinder: Börner, Jürgen, D-5565 Niederkail (DE)
(74) Vertreter: Goddar, Heinz J., Dr.

(56) Entgegenhaltungen:
- EP-A- 0 042 143
- EP-A- 0 306 017
- DE-U- 8 909 068
- FR-A- 2 033 343
- FR-A- 2 344 380
- GB-A- 1 586 848
- US-A- 4 038 892

## Beschreibung

Die Erfindung betrifft eine Vorrichtung zum Schneiden von Obst, Gemüse oder dergleichen in Scheiben mit den Merkmalen des Oberbegriffs des Anspruchs 1.

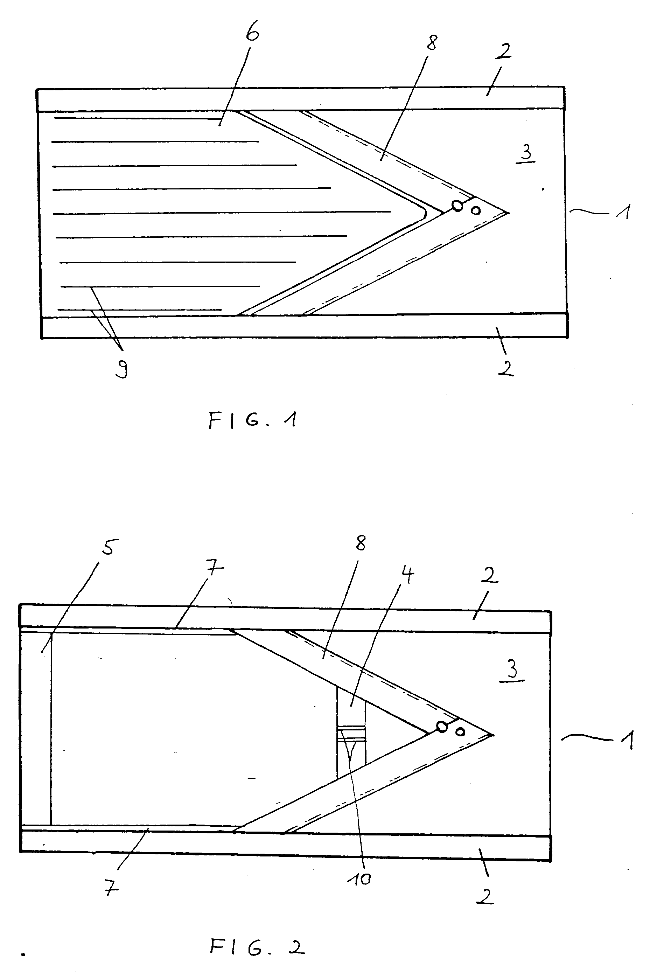

Eine derartige Vorrichtung ist aus der EP 0 306 017 A2 bekannt und in den Figuren 1 und 2 dargestellt, wobei Fig. 1 die Vorrichtung mit eingeschobener Schieberplatte und Fig. 2 die Vorrichtung mit herausgezogener Schieberplatte wiedergibt.

Wie in Fig. 2 dargestellt, umfaßt die bekannte Vorrichtung 1 zwei Rahmenleisten 2, die in ihrem hinteren Teil von einer Messerhalteplatte 3 und in ihrem vorderen Teil von zwei an der Unterseite der Vorrichtung angeordneten Querstegen 4 und 5 verbunden sind. Im vorderen Teil der Vorrichtung 1 ist eine parallel zur Messerhalteplatte 3 angeordnete Schieberplatte 6 einschiebbar (wie in Fig. 1 dargestellt), die in einer seitlichen Nut oder auf einer seitlichen Führungsleiste 7 in oder an den Rahmenleisten 2 geführt wird und in eingerastetem Zustand so angeordnet ist, daß zwischen der hinteren Kante der Schieberplatte 6 und einem Schneidmesser 8, das am vorderen Rand der Messerhalteplatte 3 befestigt ist, ein schmaler Spalt verbleibt.

Die Schieberplatte 6, auf der das Schneidgut geführt wird, weist zusätzlich für diesen Zweck vorgesehene Längsrillen 9 auf. Zusätzlich wird die Schieberplatte 6 beim Einschieben mittels einer mittig angeordneten Längsrille in einer Führungsnut 10 (Fig. 2) auf dem Quersteg 4 geführt.

Die bekannte Vorrichtung ist insofern nachteilig, als die Schieberplatte sich beim Aufdrücken des Schneidgutes durchbiegt und sich dadurch auf Dauer verformt oder im Extremfall sogar brechen kann.

Der Erfindung liegt daher die Aufgabe zugrunde, die bekannte Vorrichtung dahingehend weiterzubilden, daß ein Durchbiegen der Schieberplatte beim Aufdrücken des Schneidgutes nicht mehr möglich ist, und so die Funktionsfähigkeit und Lebensdauer der Vorrichtung insgesamt zu verbessern.

Erfindungsgemäß wird diese Aufgabe durch die im Anspruch 1 angegebenen Merkmale gelöst. Die Unteransprüche geben vorteilhafte Ausgestaltungen der Erfindung an.

Durch die erfindungsgemäß vorgeschlagenen Maßnahmen wird eine gattungsgemäße Vorrichtung zur Verfügung gestellt, bei der die Stabilität der Schieberplatte insbesondere gegen Durchbiegen deutlich erhöht ist. Seitliche Randverlängerungen der Schieberplatte und entsprechend verlängerte Führungsleisten und -nute an den Rahmenleisten, wie beim bisherigen Schieber erforderlich, werden damit überflüssig, weil ja die Stabilität bereits durch die Auflage des Schiebers auf der Abstützplatte gewährleistet ist. Gleichzeitig wird durch die erfindungsgemäße Haltegriffkonstruktion erreicht, daß die Vorrichtung fest und sicher zu greifen ist und die Schieberfläche frei von der angreifenden Hand bleibt.

Weitere Merkmale und Vorteile der Erfindung ergeben sich aus der nachfolgenden Beschreibung eines Ausführungsbeispiels, das anhand der beiliegenden Zeichnungen näher erläutert ist.

Dabei zeigt
- Fig. 3: eine schematische Darstellung der erfindungsgemäßen Vorrichtung mit eingeschobener Schieberplatte;
- Fig. 4: eine detailliertere Draufsicht auf die erfindungsgemäße Vorrichtung ohne Schieberplatte; und
- Fig. 5: eine Seitenansicht von Fig. 4, wobei an einigen Stellen Bereiche der Rahmenleisten ausgespart sind;
- Fig. 6: die erfindungsgemäße Haltegriffkonstruktion in Frontansicht; und
- Fig. 7: eine im Zusammenhang mit der erfindungsgemäßen Vorrichtung verwendbare Auffangschale.

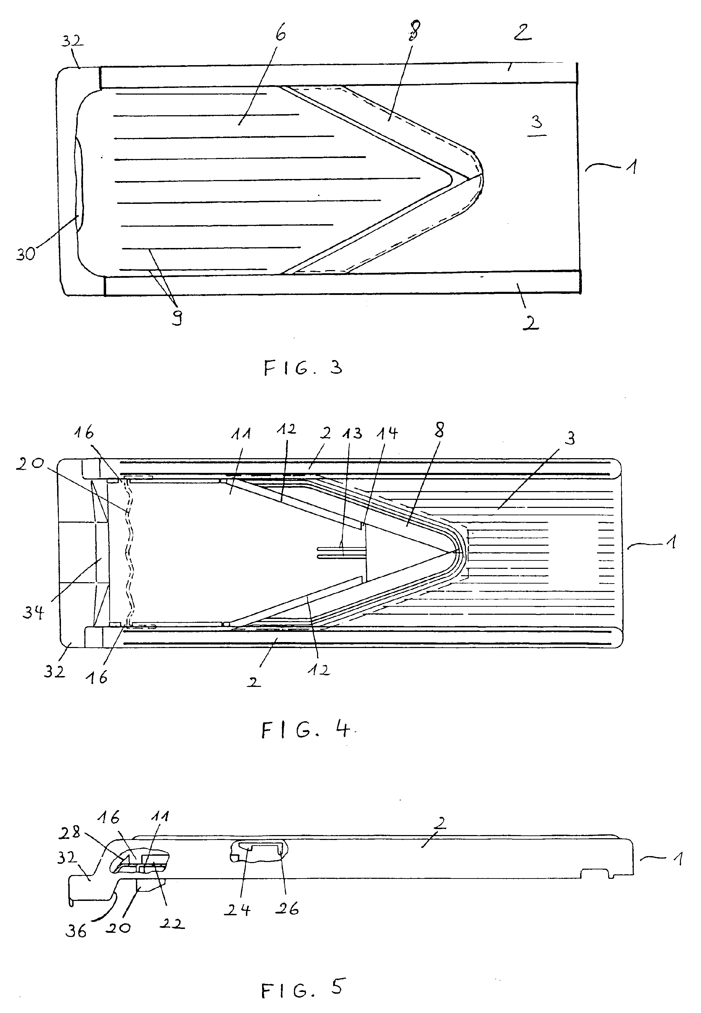

In der schematischen Darstellung von Fig. 3 ist die erfindungsgemäße Vorrichtung insgesamt mit dem Bezugszeichen 1 bezeichnet. Die Vorrichtung 1 umfaßt im wesentlichen zwei Rahmenleisten 2, die in ihrem hinteren Teil (in der Zeichnung rechts) von einer Messerhalteplatte 3 zusammengehalten sind, an deren V-förmiger Vorderkante ein Schneidmesser 8 befestigt ist. In komplementärer Formgestaltung wird die Vorrichtung durch eine Schieberplatte 6 vervollständigt, die in eingerastetem Zustand so angeordnet ist, daß zwischen ihrer hinteren Kante und dem Schneidmesser 8 ein schmaler Spalt zum Durchfallen des Schnittgutes verbleibt. Am vorderen Ende der Vorrichtung (in der Zeichnung links) ist eine Griffkante 30 der Schieberplatte 6 erkennbar sowie ein darunter angeordneter Haltegriff 32 der Rahmenkonstruktion. Auf der Schieberplatte 6 selbst verlaufen zur Führung des Schneidgutes Längsrillen 9.

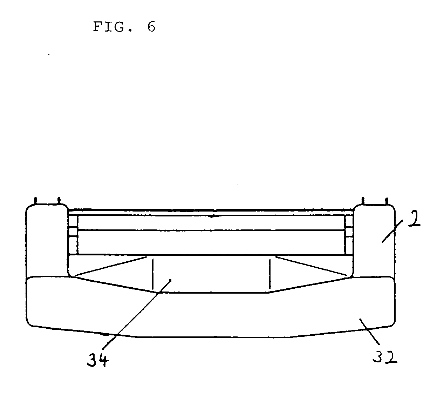

Die detailliertere Darstellung der erfindungsgemäßen Vorrichtung 1 in Fig. 4 zeigt insbesondere Einzelheiten einer erfindungsgemäßen Abstützplatte 11. Diese entspricht im wesentlichen in ihrer Form der Schieberplatte 6 mit Ausnahme der hinteren Spitze. Die Abstützplatte 11 ist an ihrem hinteren Ende mit einer Führungsnut 13 zum Eingriff mit einer mittig angeordneten Längsrippe der Schieberplatte 6 versehen und auf einem an den seitlichen Rahmenleisten 2 und der Unterseite der Messerhalteplatte 3 angebrachten Winkelprofil 14 abgestützt. Im vorderen Bereich der Abstützplatte 11 erkennt man (mit gestrichelten Linien angedeutet) einen zur Stabilitätserhöhung vorgesehenen, senkrecht auf der Abstützplatte auf dessen Unterseite stehenden, gewellten Quersteg 20 in Form eines Winkelprofils, durch den gleichzeitig Griffrillen für die Finger der angreifenden Hand zur Verfügung gestellt werden. Dabei ist der als Griffleiste dienende Quersteg 20 in ergonomisch sinnvollem Abstand zum Haltegriff 32 angeordnet (beispielsweise 4 - 6 cm von dessen Vorderkante). Um das Herausziehen der Schieberplatte aus der Vorrichtung zu erleichtern, ist in Übereinstimmung mit der Griffkante 30 der Schieberplatte 6 am Haltegriff 32 der Rahmenkonstruktion eine Griffmulde 34 vorgesehen, die in Fig. 6 noch einmal in anderer Ansicht dargestellt ist.

Die seitliche Führung der Schieberplatte sowie die für deren Einrasten vorgesehenen erfindungsgemäßen Mittel lassen sich am besten aus Fig. 5 erkennen. In der linken zeichnerischen Aussparung dieser Figur erkennt man eine an der Rahmenleiste 2 und auf der Abstützplatte 14 angeordnete Führungsleiste 22 für die Schieberplatte 6. In ihrem vorderen Bereich und in Übereinstimmung mit entsprechenden (nicht dargestellten) Nasen an der Unterseite der Schieberplatte 6 sind in der Führungsleiste 22 Kerben 16 vorgesehen, in welche besagte Nasen einrasten. Die parallel zu den Rahmenleisten 2 verlaufenden Seitenkanten der Schieberplatte 6 werden dann, wie an der rechten zeichnerischen Aussparung in Fig. 5 erkennbar, nach oben von einem Ansatz 24 an jeder Rahmenleiste 2 geführt, wobei unmittelbar davor die Führungsleiste 22 endet. Der Ansatz 24 ist dabei so angeordnet, daß in dem Moment, in dem die Seitenkante der Schieberplatte 6 mit ihm in Berührung kommt und dabei nach oben hin gehalten wird, besagte Nasen an der Unterseite der Schieberplatte auf die vorderen Bereiche 28 der Führungsleiste 22 aufgleiten. Dadurch kommt die Schieberplatte 6 unter eine leichte Biegespannung, die wieder nachläßt, sobald besagte Nasen endgültig in die Kerben 16 eingerastet sind. Das Einrasten erfolgt somit unter Überwindung eines Druckpunktes und daher mit einem deutlichen Einrastgeräusch, das dem Benutzer den festen Sitz der Schieberplatte 6 anzeigt. Gleichzeitig wird durch diese Anordnung auch ein während der Benutzung der erfindungsgemäßen Vorrichtung fester Sitz der Schieberplatte 6 gewährleistet, da das Herausziehen der Schieberplatte 6 ebenfalls wieder gegen den erwähnten Druckpunkt und die erwähnte Biegespannung erfolgen muß.

In Fig. 5 läßt sich weiterhin besonders gut erkennen, daß der Haltegriff 32 von der Unterkante der Rahmenkonstruktion 2 als nach unten abgesetzte Stufe ausgebildet ist, wobei die Setzstufe 36 vorzugsweise abgeschrägt ist. Rechts neben dem Haltegriff 32 ist die untere Kante des Winkelprofils des Querstegs 20 erkennbar.

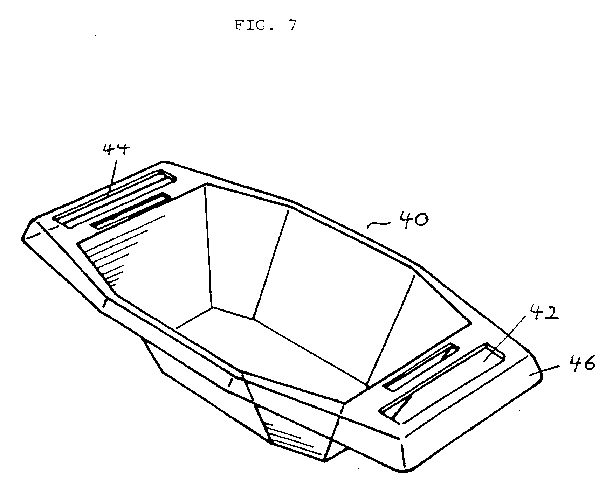

Fig. 7 schließlich zeigt eine Auffangschale 40, die infolge der erfindungsgemäßen Haltegriffkonstruktion der Vorrichtung 1 besonders gut zusammen mit dieser verwendbar ist. Die Auffangschale 40 weist in ihrem oberen Randbereich symmetrisch angeordnete Aussparungen 42 und 44 auf. Diese sind wahlweise zum Durchgriff für den Quersteg 20 der Vorrichtung 1 gedacht und entsprechend dimensioniert. Durch den Durchgriff des Querstegs 20 durch eine der Aussparungen 42 oder 44 ist es bei der erfindungsgemäßen Haltegriffkonstruktion möglich, die Auffangschale 40 und die Vorrichtung 1 mit einer Hand zusammen festzuhalten. Vorzugsweise sind die Randbereiche 46 an ihren Längsenden in demselben Maße abgeschrägt wie die Setzstufe 36 des Haltegriffs 32, um einen möglichst paßgenauen Sitz der Vorrichtung 1 auf der Auffangschale 40 sicherzustellen. Ergänzend sei noch erwähnt, daß die Auffangschale 40 selbstverständlich zur Aufnahme des mit der Vorrichtung 1 geschnittenen Gutes dient. Schließlich ist unmittelbar am Anschluß an diesen Führungsansatz 24 ein Anschlag 26 für das hintere Ende der parallel zu den Rahmenleisten 2 verlaufenden Kanten der Schieberplatte 6 vorgesehen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Vorrichtung zum Schneiden von Obst, Gemüse oder dergleichen in Scheiben, mit einer Messerhalteplatte (3), an deren Vorderkante ein V-förmiges Schneidmesser (8) angeordnet ist; zwei im wesentlichen parallel angeordneten Rahmenleisten (2), die durch die Messerhalteplatte (3) und mindestens einen weiteren Quersteg miteinander verbunden sind; und einer an den Rahmenleisten (2) geführten, parallel zur Messerhalteplatte (3) einschiebbaren Schieberplatte (6), wobei zwischen einer in Schneidrichtung nach vorne weisenden Kante der Schieberplatte (6) und dem Schneidmesser (8) ein schmaler Spalt verbleibt, dadurch gekennzeichnet, daß unterhalb der Schieberplatte (6) eine als geschlossene Fläche ausgebildete Abstützplatte (11) vorgesehen ist, deren Fläche in Form und Erstreckung der Fläche der Schieberplatte (6) entspricht und die die Schieberplatte (6) nach unten abstützt.

2. Vorrichtung nach Anspruch 1, dadurch gekennzeichnet, daß die hinteren, parallel zum Schneidmesser (8) verlaufenden Ränder (12) der Abstützplatte (11) leicht hinter die entsprechenden Ränder der Schieberplatte (6) zurückspringen.

3. Vorrichtung nach Anspruch 1 oder 2, dadurch gekennzeichnet, daß die Schieberplatte (6) mindestens eine mittig angeordnete Längsrippe auf ihrer Unterseite aufweist, die auf der Abstützplatte (11) aufliegt.

4. Vorrichtung nach einem der vorangehenden Ansprüche, dadurch gekennzeichnet, daß die Schieberplatte (6) mit entsprechenden Nasen an ihrer Unterseite in Kerben (16) einrastet, die in an die Rahmenleisten (2) und die Abstützplatte (11) angrenzenden Führungsleisten (22) ausgebildet sind.

5. Vorrichtung nach Anspruch 4, dadurch gekennzeichnet, daß unmittelbar im Anschluß an das hintere Ende der Führungsleisten (22) zumindest an einer Rahmenleiste (2) ein Ansatz (24) so oberhalb der Ebene der Schieberplatte (6) angeordnet ist, daß die Schieberplatte (6) durch die Führung dieses Ansatzes (24) und das gleichzeitige Anheben in ihrem vorderen Teil durch das Aufgleiten der Nasen an ihrer Unterseite auf die vorderen Bereiche (28) der Führungsleiste (22) unter Biegespannung kommt, die nach Einrasten besagter Nasen an ihrer Unterseite in die Kerben (16) wieder nachläßt.

6. Vorrichtung nach einem der Ansprüche 3 bis 5, dadurch gekennzeichnet, daß am hinteren Ende der Abstützplatte (11) eine Führungsnut (13) für die mittig angeordnete Längsrippe vorgesehen ist.

7. Vorrichtung nach einem der vorangehenden Ansprüche, dadurch gekennzeichnet, daß das hintere Ende der Abstützplatte (11) sich auf ein an den Rahmenleisten (2) und der Unterseite der Messerhalteplatte (3) angebrachtes Winkelprofil (14) abstützt.

8. Vorrichtung nach einem der vorangehenden Ansprüche, dadurch gekennzeichnet, daß auf der Unterseite der Abstützplatte (11) ein darauf senkrecht stehender Quersteg (20) angeordnet ist, der sich von einer Rahmenseite zur anderen erstreckt.

9. Vorrichtung nach Anspruch 8, dadurch gekennzeichnet, daß am vorderen Ende des Rahmens ein Haltegriff (32) in Form einer nach unten abgesetzten Stufe zum Abstützen des Ballens der an der Vorrichtung angreifenden Hand angeordnet ist.

10. Vorrichtung nach Anspruch 9, dadurch gekennzeichnet, daß der Quersteg (20) zum Haltegriff (32) in ergonomisch sinnvollem Abstand für die Finger der an der Vorrichtung angreifenden Hand angeordnet ist.

11. Vorrichtung nach Anspruch 10, dadurch gekennzeichnet, daß der Quersteg (20) in Form eines Winkelprofils mit 3 bis 4 Wellen ausgebildet ist.

12. Vorrichtung nach einem der vorangehenden Ansprüche, dadurch gekennzeichnet, daß die Schieberplatte (6) an ihrem vorderen Ende mit einer Griffkante (30) versehen ist.

13. Vorrichtung nach Anspruch 12, dadurch gekennzeichnet, daß der Haltegriff (32) auf seiner Oberseite eine Griffmulde (34) aufweist.

14. Vorrichtung nach Anspruch 13, dadurch gekennzeichnet, daß die Griffmulde (34) im wesentlichen symmetrisch ausgebildet und im Haltegriff (32) mittig angeordnet ist.

## Claims

1. A slicer for fruit, vegetables or the like, the slicer having: a cutter plate (3) on whose front edge a V-shaped cutter (8) is disposed; two substantially parallel longitudinal frame members (2) interconnected by the cutter plate (3) and at least one other cross-member; and a slider (6) which is guided on the frame members (2) and is introducible parallel to the cutter plate (3), a narrow gap remaining between the cutter (8) and an edge of the slider (6) which faces forwardly as considered in the slicing direction, characterised in that a support plate (11) in the form of a closed surface is provided below the slider (6) and the support plate surface corresponds in shape and extent to the slider surface, the support plate (11) providing bottom support for the slider (6).

2. A slicer according to claim 1, characterised in that the rear support plate edges (12) which extend parallel to the cutter (8) catch readily behind the corresponding edges of the slider (6).

3. A slicer according to claim 1 or 2, characterised in that the slider (6) has at least one central longitudinal rib on its underside which rests on the support plate (11).

4. A slicer according to any of the previous claims, characterised in that the slider (6) catches by way of corresponding catches on its underside in notches or the like (16) present in guides (22) adjacent the frame members (2) and the support plate (11).

5. A slicer according to claim 4, characterised in that immediately after the rear end of the guides (22) and on at least one frame member (2) a hook (24) is so disposed above the plane of the slider (6) that the same experiences bending stress by the guidance of the hook (24) and the simultaneous lifting of its front part by the sliding of the catches on its underside on the front zones (28) of the guide (22), such bending stress ceasing after the catches have caught in the notches or the like (16) on the underside of the slider (6).

6. A slicer according to any of claims 3 to 5, characterised in that a guide groove (13) for the central longitudinal rib is provided at the rear end of the support plate (11).

7. A slicer according to any of the previous claims, characterised in that the rear end of the support plate (11) bears on an angle member (14) disposed on the frame members (2) and the underside of the cutter plate (3).

8. A slicer according to any of the previous claims, characterised in that a cross-member (20) is so disposed on the underside of the support plate (11) as to be perpendicular thereto and extends from one frame side to the other.

9. A slicer according to claim 8, characterised in that a retaining grip (32) in the form of downward shouldering is disposed at the front end of the frame to support the ball of the hand gripping the slicer.

10. A slicer according to claim 9, characterised in that the cross-member (20) is disposed at an ergonomically satisfactory distance from the grip (32) for the fingers of the hand gripping the slicer.

11. A slicer according to claim 10, characterised in that the cross-member (20) is in the form of an angle member having 3 to 4 corrugations.

12. A slicer according to any of the previous claims, characterised in that the slider (6) has a gripping edge (30) at its front end.

13. A slicer according to claim 12, characterised in that the grip (32) has a top trough-like gripping part (34).

14. A slicer according to claim 13, characterised in that the trough (34) is substantially symmetrical and is disposed centrally in the grip (32).

## Revendications

1. Dispositif pour la coupe en tranches de fruits, légumes ou analogues, comprenant une plaque porte-couteau (3), sur l'arête avant de laquelle est disposé un couteau en V (8) ; deux barrettes (2) formant cadre qui sont disposées de manière sensiblement parallèle et qui sont reliées l'une à l'autre par la plaque porte-couteau (3) et par au moins une autre barrette transversale ; et une plaque coulissante (6) qui est guidée contre les barrettes (2) formant cadre et qui peut être engagée parallèlement à la plaque porte-couteau (3), un interstice étroit subsistant entre l'arête de la plaque coulissante (6) tournée vers l'avant dans la direction de coupe et le couteau (8), caractérisé en ce qu'il est prévu, en dessous de la plaque coulissante (6), une plaque d'appui (11) qui est conçue sous la forme d'une surface fermée, dont la surface correspond, par sa forme et sa longueur, à la surface de la plaque coulissante (6) et qui soutient la plaque coulissante (6) vers le bas.

2. Dispositif selon la revendication 1, caractérisé en ce que les bords arrière (12) de la plaque d'appui (11) qui sont parallèles au couteau (8) s'engagent facilement derrière les bords correspondants de la plaque coulissante (6).

3. Dispositif selon la revendication 1 ou 2, caractérisé en ce que la plaque coulissante (6) comporte, sur sa face inférieure, au moins une rainure longitudinale qui est disposée au centre et qui repose sur la plaque d'appui (11).

4. Dispositif selon l'une des revendications précédentes, caractérisé en ce que, au moyen de talons correspondants disposés sur sa face inférieure, la plaque coulissante (6) s'emboîte dans des encoches (16) qui sont réalisées dans des barrettes de guidage (22) adjacentes aux barrettes (2) formant cadre et à la plaque d'appui (11).

5. Dispositif selon la revendication 4, caractérisé en ce que, dans le prolongement immédiat de l'extrémité arrière des barrettes de guidage (22), une patte (24) est disposée, au moins contre l'une des barrettes (2) formant cadre, au-dessus du plan de la plaque coulissante (6), de façon que la plaque coulissante (6) soit soumise à une contrainte de flexion par le guidage de cette patte (24) et par le soulèvement simultané de sa partie avant dû à la montée par glisseiment des talons, disposés sur la face inférieure de ladite plaque coulissante, sur les zones avant (28) de la barrette de guidage (22), ladite contrainte de flexion se relâchant à nouveau dès que lesdits talons disposés sur la face inférieure de ladite plaque coulissante sont emboîtés dans les encoches (16).

6. Dispositif selon l'une des revendications 3 à 5, caractérisé en ce que, à l'extrémité arrière de la plaque d'appui (11), est prévue une gorge de guidage (13) pour la rainure longitudinale disposée au centre.

7. Dispositif selon l'une des revendications précédentes, caractérisé en ce que l'extrémité arrière de la plaque d'appui (11) repose sur un profil angulaire (14) monté contre les barrettes (2) formant cadre et contre la face inférieure de la plaque porte-couteau (3).

8. Dispositif selon l'une des revendications précédentes, caractérisé en ce que, sur la face inférieure de la plaque d'appui (11), est montée une barrette transversale (20) qui s'étend verticalement sur ladite face inférieure et qui s'étend de l'un des côtés du cadre à l'autre.

9. Dispositif selon la revendication 8, caractérisé en ce qu'à l'extrémité avant du cadre est montée une poignée (32) qui présente la forme d'une marche en décrochement vers le bas et qui est destinée à poser l'éminence thénar de la main qui saisit le dispositif.

10. Dispositif selon la revendication 9, caractérisé en ce que, par rapport à la poignée (32), la barrette transversale (20) est disposée à une distance appropriée, d'un point de vue ergonomique, pour les doigts de la main qui saisit le dispositif.

11. Dispositif selon la revendication 10, caractérisé en ce que la barrette transversale (20) est conçue sous la forme d'un profil angulaire muni de 3 à 4 ondulations.

12. Dispositif selon l'une des revendications précédentes, caractérisé en ce que la plaque coulissante (6) comporte une arête de préhension (30) à son extrémité avant.

13. Dispositif selon la revendication 12, caractérisé en ce que la poignée (32) comporte un évidement de préhension (34) sur sa partie supérieure.

14. Dispositif selon la revendication 13, caractérisé en ce que l'évidement de préhension (34) est conçu de manière sensiblement symétrique et est disposé au centre de la poignée (32).
